# EUROPÄISCHE PATENTSCHRIFT

(11) **EP 0 303 793 B1**
(45) Veröffentlichungstag und Bekanntmachung des Hinweises auf die Patenterteilung: **05.01.1994**
(21) Anmeldenummer: 88109733.1
(22) Anmeldetag: 18.06.1988
(51) Int. Cl.: H01M 10/34, H01M 4/24

(54) **Gasdicht verschlossener alkalischer Akkumulator**
Gas-tight closed alkaline accumulator
Accumulateur alcalin étanche

(30) Priorität: 20.08.1987 DE 3727766
(43) Veröffentlichungstag der Anmeldung: 22.02.1989
(73) Patentinhaber: VARTA Batterie Aktiengesellschaft, D-30405 Hannover (DE)
(72) Erfinder: Glaser, Helmut, Singapore 1015 (SG)
(74) Vertreter: Kaiser, Dieter Ralf, Dipl.-Ing.

(56) Entgegenhaltungen:
- EP-A- 0 218 028
- DE-B- 1 202 850
- US-A- 3 438 812
- PATENT ABSTRACTS OF JAPAN, Band 9, Nr. 280 (E-356), 8. November 1985; & JP-A-60 124 368 (MATSUSHITA) 03-07-1985
- PATENT ABSTRACTS OF JAPAN, Band 12, Nr. 7 (E-571), 9. Januar 1988; & JP-A-62 165 860 (JAPAN STORAGE BATTERY CO., LTD) 22-07-1988

## Beschreibung

Die Erfindung betrifft einen gasdicht verschlossenen alkalischen Akkumulator vom Knopfzellentyp mit positiver Nickelhydroxidelektrode und negativer Cadmiumelektrode, die jeweils die Form einer Preßpulvertablette in einer Metalldrahtgewebeumhüllung besitzen.

Knopfzellen, insbesondere des Ni/Cd-Systems, werden in großem Umfang für die Energieversorgung von Geräten der Unterhaltungselektronik, für den Betrieb von Kleinstmotoren z.B: in Elektrorasierern, in Hobby-Werkzeugen oder im Modellbau eingesetzt. Als Massenartikel unterliegen sie heute einer so hochrationalisierten Fertigung, daß gewünschte Qualitätsverbesserungen ohne die gleichzeitige Belastung mit höheren Herstellungskosten kaum noch möglich erscheinen. Indessen werden die normalen Anforderungen der Praxis von den derzeit handelsüblichen Knopfzellen zufriedenstellend erfüllt.

Nach dem gegenwärtigen Stand der Technik besitzt eine Ni/Cd-Knopfzelle einen positiv gepolten Gehäusenapf und einen negativ gepolten Deckel, beide Teile aus tiefgezogenem Stahlblech hergestellt und mit einer ca. 5µm starken Nickelauflage versehen. In der Schließungszone, durch Umbördeln des Napfrandes über den Deckelrand gebildet, befindet sich ein Dichtungsring aus Kunststoff, dem auch die elektrische Isolierung von Napf und Deckel zufällt.

Das Gehäuse-Innere ist im wesentlichen von beiden Masselektroden ausgefüllt, die als gepreßte Tabletten in einem feinmaschigen Metalldrahtgewebe, insbesondere Nickeldrahtgewebe, eingefaßt sind. Zwischen der positiven und der negativen Elektrodentablette liegt der mit Laugeelektrolyt getränkte Separator aus einem Kunststoffvlies. Der gleichmäßige Kontaktwiderstand zwischen den Elektroden und dem Gehäuse wird durch eine gewellte Kontaktfeder auf der Rückseite der negativen Elektrode aufrechterhalten.

Um im zyklischen Lade-/Entladebetrieb eine Gasansammlung in der Zelle zu vermeiden, ist die negative Elektrode gewöhnlich mit einer größeren Kapazität ausgelegt als die positive Elektrode, welche die nutzbare Kapazität der Zelle bestimmt. Ein Teil der negativen Überschußkapazität bildet eine sogenannte Ladereserve, bestehend aus überschüssigem Cadmiumhydroxid, welches noch zu metallischem Cadmium geladen werden kann, wenn die positive Elektrode bereits voll geladen ist und der nunmehr an dieser entwickelte Sauerstoff von dem bereits geladenen Teil der negativen Elektrode in demselben Maße unter Cd(OH)₂-Bildung aufgenommen wird wie im Zuge der Weiterladung aus der Ladereserve neues Cd_{met.} entsteht. Die Zelle ist dadurch überladesicher.

Der andere Teil der negativen Überschußkapazität liegt im normal entladenen Zustand der Zelle, d.h. nach erschöpfender Entladung der positiven Elektrode, als metallisches Cadmium vor und bildet damit eine noch verfügbare negative Entladereserve. Parallel mit ihrer Entladung würde der in Entladerichtung weiterfließende Strom jedoch an der nicht weiter reduzierbaren positiven Ni(OH)₂-elektrode eine elektrolytische Wasserzersetzung unter Bildung von H₂ bewirken, d.h. anstelle der Nickelhydroxidelektrode eine Wasserstoffelektrode entstehen lassen, deren Potential negativer als dasjenige der Cadmiumelektrode ist. Um der darin liegenden Gefahr einer Polumkehr der Zelle und dem Aufbau eines Gasdrucks vorzubeugen, hat man die positive Elektrodenmasse mit einem Zusatz von Cd(OH)₂ - sogen. antipolare Masse - versehen, nämlich mit einem beim gleichen Potential wie dem der negativen Elektrode reduzierfähigen Material, welches mit der Entladefähigkeit der negativen Elektrode so abgestimmt sein muß, daß diese bereits erschöpft ist und Sauerstoff entwickelt, wenn erst ein Teil des antipolaren Zusatzes zu Cd_{met.} umgewandelt ist. Unter diesen Umständen kann der Sauerstoff analog wie bei der Überladung beim Cd/Cd(OH)₂-Potential reduziert werden. Die Zelle ist dadurch auch umpolfest.

Mit einem durch entsprechende Elektrodenvorbehandlung einmal eingestellten Verhältnis zwischen positiver und negativer Gesamtkapazität sowie mit den aufeinander abgestimmten Kapazitätsanteilen für Ladereserve, Entladereserve und antipolare Masse kann die gasdichte Knopfzelle unter allen gewöhnlichen Betriebszuständen sicher arbeiten, sofern diese Ausgewogenheit der Kapazitätsanteile, die sog. Zellenbalance, nicht nachhaltig gestört wird.

Dies ist unter Extrembelastungen der Fall, z.B. bei schneller Ladung mit hohen Strömen, da in der Überladephase der Sauerstoffumsatz an der negativen Elektrode hinter der Bildungsrate an der geladenen Positiven zurückbleibt und sich die ursprüngliche Balance zuungunsten der Ladereserve verschiebt.

Um die Sauerstoffreduktion zu verbessern, hat man, z.B. gemäß DE-A-35 34 758, der negativen Elektrode ein elektrokatalytisches Aktivmaterial als Hilfselektrode zugeordnet. Der Einsatz einer Hilfselektrode brachte indessen keinen Erfolg, wenn ein vollständiger Gasverzehr auch bei Dauerladung stattfinden sollte. in der Batteriepraxis hat eine solche Forderung neuerdings durch die Verwendung schnurfreier Fernsprechapparate, wenn diese über Monate hinweg sprechbereit bleiben sollen, besondere Aktualität erhalten.

Aus der JA-A-60/124368 sind positive Elektroden für Nickel-Cadmium Akkumulatoren bekannt, die ein Metallschaum-Trägergerüst besitzen welches mit Nickelhydroxid und beispielsweise 5 bis 20Gew% Nickelpulver und 3-7Gew% Cadmiumpulver imprägniert wird. Durch das Metallschaumgerüst besitzen solche Elektroden ein bessere Eigenleitfähigkeit als Preßpulverelektroden.

Der Erfindung liegt die Aufgabe zugrunde, eine Knopfzelle verfügbar zu machen, welche den Anforderungen einer praktisch unbegrenzten Dauerüberladung bei erhöhtem Strom gewachsen ist, indem sie durch diese Behandlung keine nennenswerte Minderung ihrer entnehmbaren Kapazität erleidet, und darüber hinaus ein besseres Temperaturverhalten sowie verbesserte Hochstrombelastbarkeit aufweist.

Die Aufgabe wird erfindungsgemäß mit den im Anspruch 1 angegebenen Mitteln gelöst.

Es hat sich gezeigt, daß eine Ni/Cd-Knopfzelle eine wesentlich erhöhte Überladesicherheit bei verbesserter Hochkapazität besitzt, wenn sie neben einer mit einer Hilfselektrode versehenen negativen Elektrode eine positive Elektrode mit einer besonderen Massezusammensetzung aufweist. Die erfindungsgemäße positive Masse enthält nämlich anstelle des Leitgraphits in den herkömmlichen Massen ausschließlich Nickelpulver. Eine geeignete Qualität besitzt z.B. INCO-Nickel-Pulver 255.

Erfindungsgemäß setzt sich die Pulvermischung der positiven Elektrode aus 45 bis 55Gew.% Nickelhydroxid, 28 bis 35Gew.% Nickel, 8 bis 12Gew.% Cadmiumhydroxid und 6 bis 10Gew.% Cadmium zusammen. Vorzugsweise liegen die Anteile bei 48 bis 52Gew.% Nickelhydroxid, 28 bis 32Gew.% Nickel, 10 bis 12 Gew.% Cadmiumhydroxid und 8 bis 10Gew.% Cadmium. Eine besonders vorteilhafte Mischung weist ungefähr 49Gew.% Nickelhydroxid, 31 Gew.% metallisches Nickel, 11 Gew.% Cadmiumhydroxid und 9Gew.% Cd_{met.} auf.

Die negative Elektrode besitzt konventionelle Massenzusammensetzung aus Cadmiumhydroxid, 15 bis 25Gew.% Cadmium und 8 bis 12Gew.% Nickelpulver. Auf den Deckel ihres Nickeldrahtgewebekörbchens, der aus dem gleichen Drahtgewebe besteht, ist jedoch eine Beschichtung aus einem Gemisch von Aktivkohle, Leitruß und einem hydrophoben Bindemittel aufgebracht. Durch den unmittelbaren elektronenleitenden Kontakt mit der Hauptelektrode fungiert diese Schicht als Hilfselektrode, deren praktisch polarisationsfreie Oberfläche der bevorzugte Ort des Sauerstoffverzehrs ist.

Die Betriebssicherheit der erfindungsgemäßen Zelle ist, wie bei anderen Knopfzellen auch, durch eine bestimmte Zellenbalance gewährleistet. In diesem Fall hat es sich als besonders günstig erwiesen, die negative Elektrodenkapazität etwa doppelt so groß auszulegen wie die Nutzkapazität der positiven Elektrode. Dabei entfallen von dem negativen Kapazitätsüberschuß jeweils 50% auf die Ladereserve und Entladereserve. Die positive Elektrode ist ihrerseits um antipolare Cd/Cd(OH)₂-Masse vergrößert, deren Kapazität 30 bis 50%, bezogen auf die positive Nutzkapazität, beträgt.

Um dennoch bei Fehlfunktion der erfindungsgemäßen Knopfzelle einer Bombierung durch Aufbau eines extrem hohen Innendrucks vorzubeugen, ist an dem Gehäuse in an sich bekannter Weise eine Sollbruchstelle vorgesehen. Sie besteht aus einer rillenförmigen Schwächung der Gehäusewandung, etwa im Zentrum des Bodens oder Deckels, und ist dabei vorzugsweise als Polaritätszeichen (+ Zeichen) oder Firmensymbol gestaltet.

Wie sich gezeigt hat, lassen sich Knopfzellen aufgrund der erfindungsgemäßen Maßnahme, nämlich mittels einer an sich bekannten, mit der negativen Hauptelektrode elektrisch kurzgeschlossenen Hilfselektrode in Kombination mit einer neuen positiven Elektrode nunmehr auf praktisch unbegrenzte Zeit mit Strömen von der Größenordnung des 5-stündigen Stromes dauerüberladen. Bisher waren Knopfzellen, ohne Schaden zu nehmen, nur mit dem etwa 10-stündigen Strom für eine Überladedauer von maximal 1000 Stunden (ca. 42 Tage) belastbar. Ferner konnte der zulässige Temperaturbereich für die Entladung um 10 Grad nach oben, nämlich auf -20°C bis +60°C ausgedehnt werden. Der zulässige Temperaturbereich bei der Ladung dagegen reicht wie bei bekannten Knopfzellen von 0°C bis 45°C, die Selbstentladung beträgt 15%/Monat.

Den Beweis für die Überlegenheit erfindungsgemäßer Knopfzellen hinsichtlich des Kapazitätsverhaltens bei Dauerüberladung gegenüber Ni/Cd-Knopfzellen nach dem gegenwärtigen Fertigungsstandard lieferte ein Versuch, bei dem handelsübliche Zellen mit einer Nennkapazität von 250mAh (250 DK) neben erfindungsgemäß modifizierten Zellen (neue Zusammensetzung der positiven Elektrodentablette, Körbchendeckel der negativen Elektrode als Hilfselektrode präpariert) über 12 Monate hinweg einer Dauerüberladung mit dem fünfstündigen Strom ausgesetzt wurden. Die Zellengehäuse waren für beide Versuchsserien identisch, ihre Abmessungen (Durchmesser x Höhe) betrugen 25,1 x 8,8mm.

Durch Entladetests an in monatlichen Abständen aus dem Versuch genommenen, mit dem fünfstündigen Strom bis zu einer Entladeschlußspannung von 1V entladenen und darauf mit dem fünfstündigen Strom wiederaufgeladenen Zellen wurde deren Kapazitätsentwicklung unter dem Einfluß des gleichgroßen (fünfstündigen) Dauerüberladestroms verfolgt.

Als Kriterium für erfolgreiches Bestehen im Dauerüberladeversuch wurde eine Kapazitätsgrenze von 200mAh festgesetzt, welche die Zelle nicht vor Ablauf eines Jahres unterschreiten sollte. Weiterhin durfte eine Höhenänderung der Zelle infolge aufgestauten Innendrucks nicht nennenswert über das Toleranzmaß der Fertigung hinausgehen, was zumindest bei den erfindungsgemäßen Versuchszellen sichergestellt war.

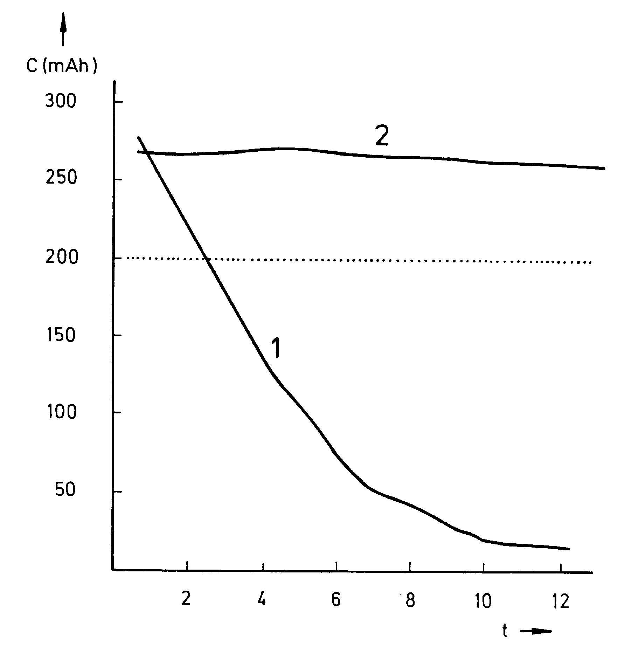

Das Ergebnis des Dauerüberladeversuchs zeigt die Figur einer Graphik.

Dort ist die Zellenkapazität C in mAh (gültig für den Entladestrom in Höhe des fünfstündigen Stroms) gegen die Überladezeit t in Monaten beim Dauerstrom in Höhe des fünfstündigen Stroms aufgetragen. Kurve 1 aus Mittelwerten der Entladetests an fertigungsüblichen Vergleichszellen 250 DK repräsentiert deren Kapazitätsverfall infolge schleppenden Gasverzehrs, da die Reduktion des Sauerstoffs an der negativen Cadmiumelektrode mit seiner Bildungsrate bei dem fünfstündigem Überladestrom nicht Schritt zu halten vermag und so die ursprünglich eingestellte Zellenbalance verlorengeht. Die Zellen genügen schon nach 1/4-jähriger Dauerüberladung nicht mehr der vorgegebenen Kapazitätsforderung und sind nach 1 Jahr total unbrauchbar. Selbst eine Wiederaufladung ist dann nicht mehr möglich.

Die erfindungsgemäßen Knopfzellen werden durch die Kapazitätskurve 2 mit nahezu unverändertem horizontalen Verlauf repräsentiert. Danach zeigen sich diese Zellen dank dem Zusammenwirken von negativer Hilfselektrode und modifizierter positiver Masse der umzusetzenden großen Gasmenge vollauf gewachsen. Auch die Ladungsaufnahme als solche wird durch die erfindungsgemäße Maßnahmenkombination stark verbessert, da der elektrochemische Umsatz des positiven Materials in Gegenwart eines ausschließlich metallischen Leitmittelpulvers kinetisch viel weniger gehemmt und dadurch effizienter ist.

Kurve 2 macht mithin die Befähigung erfindungsgemäßer Ni/Cd-Knopfzellen - hier des 250 DK-Formats - deutlich, ihre Ausgangskapazität unter Dauerladebedingungen bei relativ hohem Strom (fünfstündiger Strom) praktisch unbegrenzte Zeit zu halten. Zumindest steht nach 12 Monaten die geforderte Mindestkapazität von 200mAh bei fünfstündiger Entladung noch sicher zur Verfügung.

Versuche zur Zyklisierfähigkeit der neuen Knopfzelle haben ergeben, daß mindestens die gleich Zyklenlebensdauer wie diejenige von bekannten vergleichbaren Knopfzellen erreicht wird.

Als ein weiterer Vorteil der Erfindung bleibt schließlich hervorzuheben, daß ihre "Verpackung", d.h. Zellengehäuse und Design, gegenüber den marktgängigen Knopfzellen nach dem letzten technischen Stand unverändert ist und die erfindungsgemäßen Ausstattung der Cadmiumelektrode mit der Gasverzehrelektrode sowie die Umstellung der positiven Elektrode auf die neue Masserezeptur aus fertigungstechnischer Sicht nur einen minimalen Mehraufwand erfordert.

## Patentansprüche

1. Gasdicht verschlossener alkalischer Akkumulator vom Knopfzellentyp mit positiver Nickelhydroxidelektrode und negativer Cadmiumelektrode, die jeweils die Form einer Preßpulvertablette in einer Metalldrahtgewebeumhüllung besitzen, dadurch gekennzeichnet, daß das Pulvermaterial der positiven Elektrode eine Mischung aus 45 bis 55Gew.% Nickelhydroxid, 28 bis 35Gew.% Nickel, 8 bis 12Gew.% Cadmiumhydroxid sowie 6 bis 10Gew.% Cadmium ist und daß die negative Elektrode zum elektrochemischen Abbau des Sauerstoffdrucks mit einer Hilfselektrode gekoppelt ist.

2. Akkumulator nach Anspruch 1, dadurch gekennzeichnet, daß die Pulvermischung der positiven Elektrode eine Zusammensetzung von etwa 49Gew.% Nickelhydroxid, 31Gew.% Nickel, 11Gew.% Cadmiumhydroxid und 9Gew.% Cadmium aufweist.

3. Akkumulator nach den Ansprüchen 1 und 2, dadurch gekennzeichnet, daß das Material der negativen Elektrode eine konventionelle Cadmiumhydroxidmasse mit 15 bis 25Gew.% Cadmium und 8 bis 12Gew.% Nickelpulver-Anteilen ist.

4. Akkumulator nach Anspruch 3, dadurch gekennzeichnet. daß die Hilfselektrode durch eine Beschichtung des aus Metalldrahtgewebe bestehenden Deckels der Umhüllung der negativen Elektrode mit einem Gemisch aus Aktivkohle, Leitruß und einem hydrophoben Bindemittel gebildet ist.

5. Akkumulator nach einem der Ansprüche 1 bis 4, dadurch gekennzeichnet, daß an dem Knopfzellengehäuse eine Sollbruchstelle in Gestalt einer rillenförmigen Schwächung der Gehäusewandung vorgesehen ist.

## Claims

1. Gas-tight alkaline battery of the button-cell type, having a positive nickel hydroxide electrode and a negative cadmium electrode, each of which has the form of a pressed-powder tablet in a metal wire cloth casing, characterized in that the powder material of the positive electrode is a mixture comprising 45 to 55% by weight of nickel hydroxide, 28 to 35% by weight of nickel, 8 to 12% by weight of cadmium hydroxide and 6 to 10% by weight of cadmium, and in that the negative electrode is coupled to an auxiliary electrode for the purpose of electrochemically releasing the oxygen pressure.

2. Battery according to Claim 1, characterized in that the powder mixture of the positive electrode has a composition of approximately 49% by weight of nickel hydroxide, 31% by weight of nickel, 11% by weight of cadmium hydroxide and 9% by weight of cadmium.

3. Battery according to Claims 1 and 2, characterized in that the material of the negative electrode is a conventional cadmium hydroxide mass having 15 to 25% by weight of cadmium and 8 to 12% by weight of nickel powder proportions.

4. Battery according to Claim 3, characterized in that the auxiliary electrode is formed by a coating of the lid, comprising metal wire cloth, of the casing of the negative electrode with a mixture of activated carbon, conductive carbon black and a hydrophobic binder.

5. Battery according to one of Claims 1 to 4, characterized in that there is provided on the button-cell housing a predetermined break point in the form of a groove-type weakening in the housing wall.

## Revendications

1. Accumulateur alcalin étanche aux gaz du type pile élément bouton avec une électrode positive d'hydroxyde de nickel et une électrode négative de cadmium, qui ont respectivement la forme d'une tablette en poudre à mouler dans une enveloppe en toile métallique, caractérisé :
- en ce que le matériau en poudre de l'électrode positive est un mélange de 45 à 55 % en poids d'hydroxyde de nickel, de 28 à 35 % en poids de nickel, de 8 à 12 % en poids d'hydroxyde de cadmium ainsi que de 6 à 10 % en poids de cadmium et,
- en ce que l'électrode négative est accouplée à une électrode auxiliaire pour la dégradation électrochimique de la pression d'oxygène.

2. Accumulateur selon la revendication 1, caractérisé en ce que le mélange de poudre de l'électrode positive a une composition d'environ 49 % en poids d'hydroxyde de Nickel, 31 % en poids de nickel, 11 % en poids d'hydroxyde de cadmium et 9 % en poids de cadmium.

3. Accumulateur selon les revendications 1 et 2, caractérisé en ce que le matériau de l'électrode négative est une masse d'hydroxyde de cadmium conventionnelle ayant de 15 à 25 % en poids de cadmium et de 8 à 12 % en poids de parties de poudre de nickel.

4. Accumulateur selon la revendication 3, caractérisé en ce que l'électrode auxiliaire est constituée par un revêtement du couvercle composé de tissu métallique de l'enveloppe de l'électrode négative avec un mélange de charbon actif, de noir de carbone conducteur d'un liant hydrophobe.

5. Accumulateur selon l'une des revendications 1 à 4, caractérisé en ce qu'il est prévu sur le boîtier de l'élément bouton un endroit destiné à la rupture sous la forme d'un affaiblissement en forme de rainure de la paroi du boîtier.
